# FASCICULE DE BREVET EUROPEEN

(11) **EP 3 066 443 B1**
(45) Date de publication et mention de la délivrance du brevet: **17.05.2017**
(21) Numéro de dépôt: 14805194.9
(22) Date de dépôt: 04.11.2014
(51) Int. Cl.: G01M 3/04, G01M 3/16, G01M 3/18

(54) **ELEMENT DÉTECTEUR GONFLANT, CÂBLE DE DÉTECTION MODULAIRE ET SYSTÈME DE DÉTECTION POUR DÉTECTER DES FUITES DE LIQUIDE NON-CONDUCTEUR**
AUFBLASBARES DETEKTIONSELEMENT, MODULARES DETEKTIONSKABEL SOWIE DETEKTIONSSYSTEM ZUR ERKENNUNG VON LECKAGEN EINER NICHTLEITENDEN FLÜSSIGKEIT
INFLATABLE DETECTING ELEMENT, MODULAR DETECTION CABLE AND DETECTION SYSTEM FOR DETECTING LEAKS OF NONCONDUCTIVE LIQUID

(30) Priorité: 08.11.2013 FR 1360955
(43) Date de publication de la demande: 14.09.2016
(73) Titulaire: TTK, 75008 Paris (FR)
(72) Inventeur: GAUTIER, Olivier, F-92200 Neuilly sur Seine (FR); GILLOT, Olivier, F-92200 Neuilly sur Seine (FR); BALATCHEV, Stefan, Ottawa, Ontario K1H 5Y6 (CA)
(74) Mandataire: Pontet Allano & Associes
(86) Numéro de dépôt international: PCT/EP2014/073733
(87) Numéro de publication internationale: WO 2015/067615

(56) Documents cités:
- DE-A1- 2 453 215
- US-A- 5 341 128
- US-A- 5 514 338
- US-A- 5 574 377

## Description

La présente invention concerne un élément détecteur pour un câble de détection destiné à détecter des fuites de liquide électriquement non-conducteur. L'invention concerne également un câble de détection mettant en oeuvre un tel élément détecteur et un système de détection permettant d'utiliser de tels câbles de détection. Elle concerne également un procédé de fabrication d'un tel élément détecteur et un procédé de fabrication d'un tel câble de détection.

L'élément détecteur comprend au moins un membre de détection en une matière qui gonfle lorsqu'elle est en contact avec ledit liquide et qui est chargée de particules électriquement conductrices, de sorte que le membre de détection est conducteur lorsqu'il n'est pas contaminé par ledit liquide non-conducteur, et qu'il perd de sa conductivité lorsqu'il gonfle sous l'effet dudit liquide.

Selon l'invention, ce membre de détection est connecté électriquement à un module électronique dit de gestion, lequel est agencé pour détecter la présence dudit liquide en constatant une diminution de la conductivité dudit membre de détection, typiquement par mesure ohmique.

Le domaine de l'invention est la détection de fuites de liquide électriquement non-conducteur, en particulier avec des câbles de détection, et par exemple pour des hydrocarbures.

### Etat de la technique

La détection et la localisation de fuites de liquide électriquement non-conducteur se font avec des systèmes ou installations utilisant des câbles de détection, qui sont disposés dans des emplacements où des fuites sont susceptibles de se produire ou de s'écouler.

Les câbles de détection connus sont de différents types. Certains utilisent des variations de caractéristiques électromagnétiques se produisant lorsque qu'un liquide s'infiltre entre plusieurs fils d'un câble. Ces variations sont détectées par exemple en mesurant des variations d'impédance résultant de variations de la capacité entre ces fils ou de l'inductance d'un tel câble. Cette technologie présente des performances qui gagneraient à être améliorées, par exemple en rapidité et/ou sensibilité de détection. En outre, le principe de la mesure requiert une électronique assez complexe, ce qui la rend coûteuse à fabriquer et peut représenter une certaine fragilité à l'environnement.

D'autres utilisent le changement de forme d'un élément en un matériau "réactif" conducteur, qui gonfle au contact du liquide à détecter et permet ainsi d'établir un contact électrique entre différents éléments normalement séparés.

Dans le document US 5 101 657 par exemple, deux fils de détection, formés chacun par un fil conducteur dénudé, s'étendent sans se toucher à l'intérieur du câble sur toute sa longueur, et sont entourés par une gaine isolante ajourée. Cette gaine ajourée est entourée par une enveloppe de ce matériau réactif, lui-même enserré dans une enveloppe de contention ajourée.

Lorsque le matériau réactif gonfle sous l'effet du liquide à détecter, l'enveloppe de contention l'empêche de prendre du volume vers l'extérieur. Il s'expanse donc vers l'intérieur, et vient au contact des deux fils de détection en passant à travers la gaine isolante ajourée. Le matériau réactif contaminé crée ainsi un court circuit électrique entre les deux fils dénudés. La baisse de la résistance électrique entre les deux fils détecteurs est utilisée pour indiquer la présence du liquide à détecter.

Ces technologies présentent aussi des inconvénients. Par exemple, la structure est complexe et requiert un positionnement précis des fils pour éviter les courts circuits entre les fils de détection en l'absence de liquide, ce qui est source de complexité à la fabrication. Il serait utile aussi de diminuer le délai de détection ou la sensibilité selon la quantité de liquide à détecter.

Il a aussi été proposé, dans le document US5341128, un capteur linéaire formé par deux éléments conducteurs connectés à leur extrémité. L'un des éléments est métallique, et l'autre est un matériau gonflant sensible aux hydrocarbures et incluant une charge conductrice. La détection utilise alors une alimentation électrique et un indicateur de résistance. Ces technologies présentent cependant des inconvénients, par exemple une certaine fragilité du capteur en milieu difficile, et où ne sont pas gérés les problèmes de fiabilité et d'environnement agressifs voire dangereux.

Un but de l'invention est de pallier tout ou partie des inconvénients de l'état de la technique. Il s'agit par exemple d'augmenter la rapidité de détection, ou la sensibilité pour de faibles quantités de liquides, d'obtenir une meilleure robustesse, une fabrication plus simple ou moins coûteuse, ou une utilisation plus simple ou plus flexible.

### Exposé de l'invention

L'invention propose un élément détecteur pour câble de détection de fuites d'un liquide électriquement non-conducteur, ledit élément détecteur comprenant au moins un moyen senseur qui inclut au moins un membre de détection, réalisé au moins en partie en une matière qui gonfle lorsqu'elle est en contact avec ledit liquide et qui est chargée de particules électriquement conductrices, de sorte que :
- le membre de détection est conducteur lorsqu'il n'est pas contaminé par ledit liquide non-conducteur, et
- le membre de détection perd de sa conductivité lorsqu'il gonfle sous l'effet dudit liquide.

### Méthode de détection

Selon l'invention, ce membre de détection est connecté électriquement à un module électronique dit de gestion, lequel est agencé pour détecter la présence dudit liquide en constatant une diminution de la conductivité dudit membre de détection, typiquement par mesure ohmique.

Cette détection peut être déterminée par exemple lorsque la conductivité présente une variation dont l'ampleur dépasse un seuil prédéterminé, ou lorsque la valeur de la conductivité devient inférieure à un seuil déterminé.

Cette méthode de détection peut être mis en oeuvre dans différentes configurations présentant des formes différentes pour le membre de détection, par exemple en fonction des applications visées et de la géométrie des zones à protéger.

Le membre de détection est fait d'un matériau qui gonfle lorsqu'il est contaminé par le liquide non-conducteur. Ce matériau "gonflant" est chargé de particules conductrices, par exemple de particules de cuivre ou de noir de carbone, qui sont en contact les unes des autres lorsque le matériau n'est pas contaminé par le liquide à détecter. De sorte que ce membre de détection est électriquement conducteur lorsqu'il n'est pas contaminé par le liquide à détecter.

Lorsque ce membre de détection est en contact avec le liquide, le volume du matériau augmente. Au fur et à mesure que le matériau gonfle, les particules conductrices incluses dans ce matériau s'éloignent les unes des autres, et le membre de détection perd sa conductivité électrique.

Le membre de détection est de préférence enrobé par une mince enveloppe de protection, présentant une surface continue, faite en un matériau perméable aux liquides dont la fuite est à détecter, par exemple le même silicone mais sans charge de particules conductrices.

Cette méthode de détection permet d'obtenir une détection plus rapide, avec un temps de réaction par exemple de l'ordre de 3-5mn pour de l'essence ou 15-20mn pour du gazole.

Elle permet aussi de réutiliser l'élément détecteur une fois le membre de détection décontaminé, et donc autorise des tests réels des systèmes à la fabrication et une fois installés.

Par rapport aux méthodes "mécaniques" utilisant le changement de forme du matériau réactif, on comprend que la détection obtenue par l'invention peut être plus fiable, en particulier car moins sujette aux problèmes de dilatation thermique ou de charge mécanique extérieure. Elle dépend aussi beaucoup moins de la géométrie des différents éléments constitutifs, et est donc moins complexe à fabriquer et plus robuste à l'installation et l'usage.

Cette méthode de détection peut aussi être mise en oeuvre à travers des mesures électriques très simples, typiquement par mesure ohmique. Celles-ci peuvent être réalisées par une électronique très simple, rustique, robuste et compacte, et peu coûteuse à fabriquer comme à gérer et à entretenir.

### Applications linéaires

Dans de nombreuses applications, on utilise un capteur allongé en forme de câble, qui est raccordé d'un côté à une centrale de détection et court le long et au dessous d'un objet susceptible de fuir, par exemple un pipeline. Ce câble peut aussi être disposé dans une zone susceptible de recueillir une fuite, par exemple au fond d'une rigole ou d'un bac de rétention situé sous une cuve de carburant, ou dans de nombreuses autres configurations.

Ainsi, selon l'invention, le moyen senseur présente une forme de faisceau allongé avec une extrémité proximale et une extrémité distale vis-à-vis du module de gestion, et comprend en outre au moins deux fils conducteurs isolés, dits de détection, formant ainsi avec le membre de détection un faisceau s'étendant sur toute la longueur de l'élément détecteur. Ces fils de détection sont connectés par une extrémité dite proximale audit module de gestion.

Selon l'invention, ce module de gestion est agencé pour :
- d'une part détecter la présence de liquide en constatant une diminution de la conductivité dudit membre de détection au moyen d'une connexion d'une extrémité distale dudit membre de détection avec l'extrémité distale de l'un des fils conducteurs de détection, dit fil retour (ou de référence), et
- d'autre part vérifier la continuité de l'élément détecteur en constatant la continuité électrique d'un circuit établi par connexion de l'extrémité distale de l'autre fil conducteur de détection, dit fil de continuité, avec l'extrémité distale dudit fil retour.

Selon une particularité de l'invention, le membre de détection présente de préférence la forme d'une enveloppe entourant au moins l'un desdits fils conducteur isolés.

Cette méthode de détection permet aussi de grandes longueurs pour l'élément de détection tout en profitant des avantages cités ci-dessus.

A titre d'exemple, l'invention permet typiquement de réaliser des portions linéaires jusqu'à 20m voire 40m pour un même module de gestion.

### Capteur adressable

Selon un autre aspect, l'invention propose aussi un capteur, ou câble de détection dans le cas d'une configuration allongée, pour la détection de fuites de liquides non-conducteurs.

Selon l'invention, ce capteur comprend d'une part au moins un élément détecteur comme exposé ici ; et d'autre part au moins un élément de communication, incluant :
- au moins un module électronique de communication agencé pour émettre une donnée de mesure ou détection issue dudit élément détecteur, en association avec une donnée identifiant ledit module de communication et/ou en réponse à un signal d'interrogation adressé sélectivement audit module de communication, et
au moins un fil conducteur isolé, dit de communication, formant un bus de communication prévu pour transporter un signal de communication incluant un tel signal d'interrogation et/ou une telle donnée de mesure, depuis et/ou vers ledit module de communication, sur toute la longueur dudit élément détecteur, en coopération avec au moins un fil conducteur constituant une référence de tension, par exemple un fil de masse.

Le signal de communication est de préférence un signal numérique.

De préférence, le bus de communication comprend en outre au moins deux fils, dits d'alimentation, isolés l'un de l'autre et agencés pour fournir une alimentation électrique à un ou plusieurs modules électroniques disposés le long dudit câble de détection, ou d'un autre câble de détection similaire ou identique qui lui est raccordé. Typiquement, le signal de communication est produit ou détecté par comparaison avec la tension de l'un de ces deux fils d'alimentation.

En installant de multiples exemplaires d'un tel capteur, avec des données identifiantes différentes, il est ainsi possible de distinguer de quel capteur provient l'information de détection, et donc dans quel zone ou lieu protégé se situe la fuite détectée.

### Système de détection

Selon un aspect, l'invention propose un système de détection (590, 690, 790) comprenant une pluralité de capteurs (500₁ à 500ₙ, 600₁ à 600ₙ, 700₁ à 700ₙ) tels qu'exposé ici, et agencés chacun de façon à recevoir un signal d'interrogation différent des autres.

Typiquement mais non obligatoirement, ces multiples exemplaires sont raccordés en série les uns aux autres, de façon à former un câble "composite". Les identifiants différents des différents capteurs permettent ainsi de détecter une fuite le long de ce câble sur une portion de ce câble composite tout en identifiant plus précisément la position de cette fuite.

Dans ce cas, un premier capteur dit "amont" est branché par une extrémité à une centrale de gestion ou module de surveillance (608) avec qui il échange tous les signaux de communication de l'ensemble du câble composite, et de préférence qui lui fournit l'alimentation électrique. Le bus de communication (et d'alimentation) de chaque capteur transporte alors les signaux de communication, dans les deux sens, entre le module de surveillance et tous les capteurs situés en aval de lui. De préférence, chaque capteur reçoit l'alimentation électrique de son voisin en amont et la fournit à son voisin en aval.

De préférence, le module de communication est agencé pour utiliser un unique fil de communication :
- à la fois pour transporter et recevoir un signal d'interrogation, et
- à la fois pour transporter et émettre une donnée de mesure émise en réponse audit signal d'interrogation.

Le nombre de conducteurs en est limité, au bénéfice de la simplicité et de la compacité et la simplicité du faisceau.

Selon les applications, des capteurs peuvent être connectés entre eux de différentes façons, par des connecteurs démontables ou des connecteurs permanents, pour former un ou plusieurs câbles composites.

De façon particulièrement avantageuse, l'invention peut être implémentée, pour ses modules de gestion et pour le bus de communication (et d'alimentation électrique), selon des technologies répondant aux normes anti-explosion pour pouvoir installer de tels éléments ou capteurs (simples ou composites) dans des environnements à atmosphère explosive ou ATEX.

De telles technologies sont connues par l'homme du métier, ou peuvent être réalisées telles que définies dans la demande FR 12 61349.

Des modes de réalisation variés de l'invention sont prévus, intégrant selon l'ensemble de leurs combinaisons possibles les différentes caractéristiques optionnelles exposées ici.

### Liste des figures

D'autres particularités et avantages de l'invention ressortiront de la description détaillée d'un mode de mise en oeuvre nullement limitatif, et des dessins annexés, non à l'échelle, sur lesquels :
- la FIGURE 1 est une vue schématique de côté illustrant un exemple de mode de réalisation d'un élément détecteur selon l'invention, avec moyen senseur de forme linéaire incluant fil retour et fil de continuité ;
- la FIGURE 2 est une vue en coupe transversale du moyen senseur, illustrant un exemple de mode de réalisation d'un élément détecteur selon l'invention avec enveloppe de détection entourant un fil conducteur ;
- la FIGURE 3 est une vue en coupe transversale du faisceau, illustrant un exemple de mode de réalisation du faisceau d'un capteur selon l'invention, incluant un élément détecteur à enveloppe de détection et un bus de communication à trois fils, torsadés ensemble autour de l'un des fils conducteurs isolés ;
- la FIGURE 4 est une vue en coupe transversale du faisceau, illustrant un exemple de mode de réalisation préféré du faisceau d'un capteur selon l'invention, proche de celui de la FIGURE 3 avec une âme centrale à isolant crénelé et une gaine de protection ajourée ;
- la FIGURE 5 est une perspective représentant une extrémité interrompue du faisceau de la FIGURE 4, dans une version avec gaine de protection sous la forme d'un filet extrudé ;
- la FIGURE 6 est une vue schématique de côté illustrant un exemple de mode de réalisation d'un système de détection selon l'invention, comprenant une pluralité de capteurs avec modules de connexion détachables fixés aux extrémités des capteurs ;
- la FIGURE 7 est une vue schématique de côté illustrant un exemple de mode de réalisation d'un capteur selon l'invention, avec modules de connexion détachables aux extrémités, par exemple l'un des capteurs de la FIGURE 6 ;
- les FIGURE 8 et FIGURE 9 sont des vues en coupe de côté représentant plus précisément deux modules de connexion détachables complémentaires entre eux, par exemple au sein de capteurs selon l'invention tels que ceux de la FIGURE 6 ;
- la FIGURE 10 est une vue schématique de côté illustrant un exemple de mode de réalisation d'un système de détection selon l'invention, comprenant une pluralité de capteurs avec modules de connexion permanentes entre les capteurs ;
- la FIGURE 11 est une vue en coupe en perspective représentant plus précisément un module de connexion permanente entre deux capteurs, dans une mode de réalisation de capteurs tels que ceux de la FIGURE 10 ;
- la FIGURE 12 est une vue schématique de côté illustrant un exemple de mode de réalisation d'un système de détection selon l'invention, dans une version comprenant des capteurs connectés de façon permanente tels que ceux de la FIGURE 11, formant des groupes eux-mêmes connectés ensemble par des modules de connexion détachables tels que ceux des FIGURE 8 et FIGURE 9 ;
- la FIGURE 13 est une est une vue en coupe transversale du faisceau, illustrant un autre exemple de mode de réalisation du faisceau d'un capteur selon l'invention, incluant un élément détecteur à enveloppe de détection oblongue entourant deux fils torsadé avec une enveloppe de protection oblongue entourant un bus de communication à trois fils, à l'intérieur d'une gaine de protection ajourée ;
- la FIGURE 14 illustre schématiquement en vue de côté un autre exemple de mode de réalisation d'un élément détecteur selon l'invention, avec moyen senseur en forme de boucle.

### Description d'un exemple de mode de réalisation

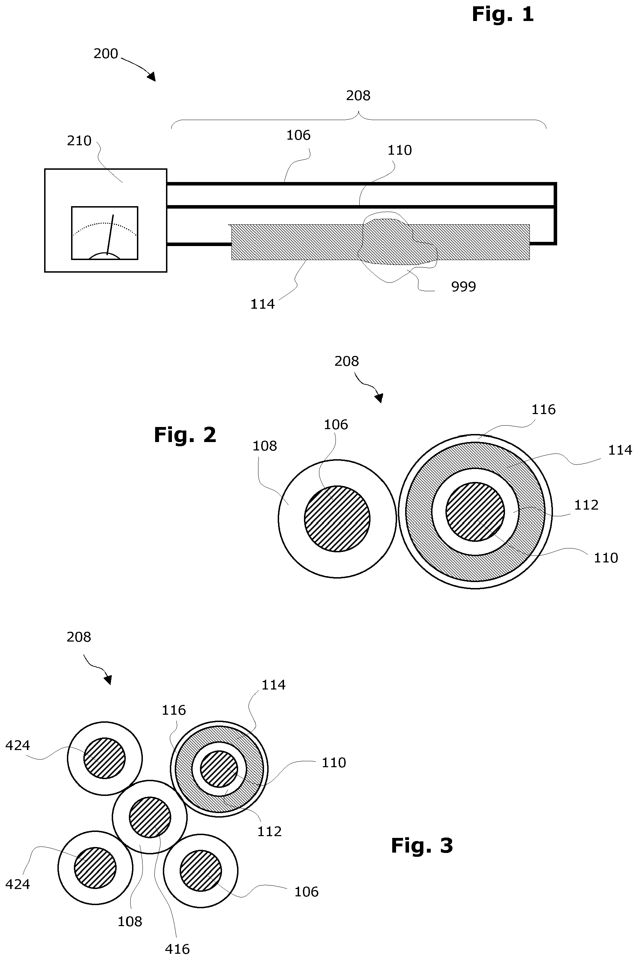

La FIGURE 1 est une vue schématique de côté illustrant un exemple de mode de réalisation d'un élément détecteur selon l'invention, avec moyen senseur de forme linéaire incluant fil retour et fil de continuité.

Le moyen senseur 208 inclut un membre de détection 114, réalisé au moins en partie en une matière qui gonfle lorsqu'elle est en contact avec le liquide à détecter 999, et qui est chargée de particules électriquement conductrices, de sorte que :
∘ le membre de détection 114 est conducteur lorsqu'il n'est pas contaminé par le liquide non-conducteur à détecter, et
∘ le membre de détection 114 perd de sa conductivité lorsqu'il gonfle sous l'effet dudit liquide 999.

Ce moyen senseur présente une forme allongée, ou linéaire, avec une extrémité proximale et une extrémité distale vis-à-vis du module de gestion 210. Le membre de détection 114 est connecté électriquement au module électronique dit de gestion 210 qui réalise en permanence ou à intervalles régulier une mesure ohmique de sa conductivité. Ce module de gestion 210 utilise cette mesure pour indiquer une présence du liquide à détecter 999 lorsqu'il constate une diminution de la conductivité dudit membre de détection.

Dans les modes de réalisation où l'élément détecteur présente une forme linéaire connectée d'un seul côté, le moyen senseur comprend en outre au moins un fil conducteur isolé dit fil retour (ou de référence), par exemple 110, formant un faisceau avec le membre de détection, et qui est connecté par son extrémité proximale audit module de gestion 210.

Le module de gestion 210 réalise la mesure à l'aide de ce fil de retour, pour détecter la présence de liquide en constatant une diminution de la conductivité dudit membre de détection 114 au moyen d'une connexion d'une extrémité distale dudit membre de détection avec l'extrémité distale de ce fil de retour (ici sur la droite de la figure).

De préférence (mais non obligatoirement), le moyen senseur comprend en outre au moins un deuxième fil conducteur isolé dit fil de continuité, 106 dans cet exemple, inclus dans le faisceau avec le membre de détection, et qui est connecté par son extrémité proximale audit module de gestion 210.

Dans ce cas, le module de gestion utilise ce fil de continuité pour vérifier la continuité du moyen senseur de l'élément détecteur, en constatant la continuité électrique d'un circuit établi par connexion de l'extrémité distale de l'autre fil conducteur de détection, dit fil de continuité, avec l'extrémité distale dudit fil retour.

Ainsi, lorsque le module de gestion constate une perte de la conductivité du circuit formé par le membre de détection 114 et le fil retour, alors que le circuit formé par le fil de continuité et le fil est toujours conducteur, il peut indiquer la présence d'une contamination par le liquide à détecter 999.

De façon différente, lorsque le module de gestion 210 constate que ces deux circuits ont tous deux perdu leur conductivité, soit une résistance quasi infinie, il peut indiquer la présence d'une rupture du fil de continuité, et donc très probablement du faisceau dans son ensemble.

Le fil retour et le fil de continuité sont ici appelés fils de détection 110 et 110, et leurs rôles sont interchangeables, simplement par modification de leurs connexions au module de gestion.

la FIGURE 2 est une vue en coupe transversale du moyen senseur, illustrant un exemple de mode de réalisation d'un élément détecteur selon l'invention avec enveloppe de détection entourant un fil conducteur ;

En FIGURE 2 est illustré un mode de réalisation particulier, dans lequel le membre de détection 114 présente la forme d'une enveloppe enrobant l'un 110 desdits fils conducteur isolés, ici de façon cylindrique.

L'agencement du membre de détection comme enveloppe enrobant l'un des fils conducteurs présentent différents avantages, comme par exemple de conférer une meilleure résistance mécanique au membre de détection dont le matériau en lui-même présente typiquement une faible résistance, par exemple à la traction.

Là encore, même lorsque les fils de détection présentent des dispositions différentiées, du point de vue de la géométrie du faisceau, il est à noter que le choix du fil utilisé pour la fonction retour et du fil utilisé pour la fonction continuité n'a que peu d'importance voire aucune : par exemple, le fil enrobé 110 peut être utilisé comme fil retour et le fil adjacent 106 comme fil de continuité, mais le choix inverse peut tout à fait être implémenté aussi.

Comme illustré en FIGURE 2, de préférence mais non obligatoirement, le membre de détection 114 (quelle que soit sa géométrie) est en outre enrobé par une enveloppe électriquement isolante 116 qui est étanche à un ou plusieurs liquides conducteurs, en particulier l'eau, tout en laissant passer le liquide non-conducteur à détecter. Typiquement, ce matériau peut être une version isolante du matériau gonflant utilisé pour le membre de détection lui-même, mais sans particules chargées. Son épaisseur peut être par exemple de l'ordre de 30µm.

La présence de cette enveloppe isolante permet d'éviter tout contact électrique entre le membre de détection 114 et tout liquide conducteur pouvant être présent dans l'environnement extérieur. En effet, un tel liquide conducteur risquerait de fausser les mesures de conductivité en augmentant ou en maintenant la conductivité de l'ensemble même en cas de contamination, en créant court-circuitant la partie contaminée du membre de détection.

On obtient ainsi un faisceau insensible à l'eau, voire à d'autre liquides conducteurs, et qui peut être enterré.

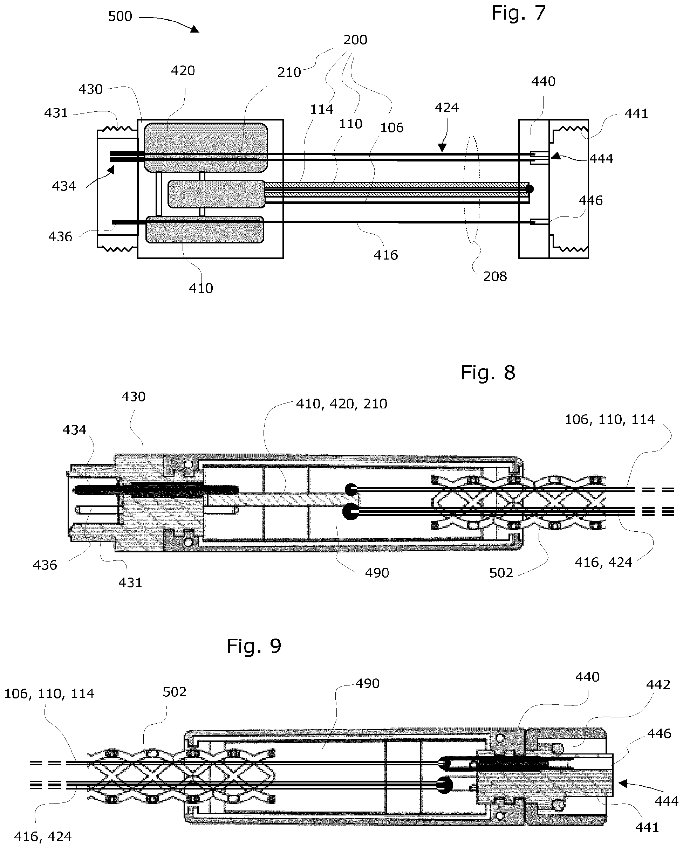

Comme illustré par exemple en FIGURE 7, dans certains modes de réalisation, l'invention propose en outre un capteur 500 adressable qui comprend, en plus d'un ou plusieurs éléments détecteurs 200 selon n'importe laquelle des configurations de l'invention, au moins un élément de communication incluant :
- au moins un module électronique de communication 410 agencé pour émettre une donnée de mesure ou détection issue dudit élément détecteur 200, en association avec une donnée identifiant ledit module de communication et/ou en réponse à un signal d'interrogation adressé sélectivement audit module de communication, et
- au moins un fil conducteur isolé 416, dit de communication, formant un bus de communication prévu pour transporter un signal de communication incluant un tel signal d'interrogation et/ou une telle donnée de mesure, depuis et/ou vers ledit module de communication 410, sur toute la longueur dudit élément détecteur 200, en coopération avec au moins un fil conducteur constituant une référence, par exemple un référence de tension telle qu'un conducteur à la masse.

De préférence, le bus de communication est intégré dans un même faisceau avec l'élément conducteur, et comprend lui-même au moins deux fils 424 fournissant une alimentation électrique, par exemple l'un à 0V et l'autre à +5V.

Une telle alimentation intégrée au capteur permet d'obtenir un capteur ou plusieurs capteurs qui sont tous alimentés par une seule source, et peut donc fonctionner de façon autonome au sein d'une installation de grandes dimensions. Dans ce cas, le signal de communication est de préférence transporté en coopération entre le fil de communication et l'un des fils d'alimentation, de façon numérique ou analogique, par exemple par variation de tension entre ces deux fils.

Optionnellement, le capteur 500 peut comprendre un module local d'alimentation 420, qui reçoit une alimentation électrique depuis une centrale de surveillance par des fils d'alimentation 424, directement ou par l'intermédiaire d'un ou plusieurs autres capteurs. De façon locale au capteur, seul ou avec ses voisins, ce module d'alimentation 420 peut alimenter permet par exemple d'alimenter le module de gestion 210 et le module de communication 410.

### Mode de réalisation préféré du faisceau

La FIGURE 3 est une vue en coupe transversale du faisceau, illustrant un exemple de mode de réalisation du faisceau d'un capteur selon l'invention, incluant un élément détecteur à enveloppe de détection et un bus de communication à trois fils, torsadés ensemble autour de l'un des fils conducteurs isolés.

La FIGURE 3 illustre un mode de réalisation d'un tel capteur dans lequel le faisceau comprend cinq fils conducteurs isolés 110, 106, 416, 424, dont l'un 110 est enrobé par l'enveloppe de détection 114 elle-même munie d'une gaine gonflante isolante 116.

Dans ce mode de réalisation, le membre de détection 114 et trois des autres fils conducteurs isolés, c'est-à-dire les fils conducteurs 106 et 424, entourent une âme centrale formée par le dernier des fils conducteurs isolés, 416 avec son enveloppe isolante 108.

De préférence, ces fils conducteurs extérieurs 424, 106 et 110 avec 114 sont torsadés autour de l'âme centrale 108.

L'enveloppe de détection 114 est de préférence disposée dans la partie extérieure du faisceau, afin de favoriser son contact avec le liquide à détecter.

Par contre, dans tous les exemples de modes de réalisation comprenant un bus de communication, il est à noter que le choix des fils conducteurs utilisés pour les différentes fonctions n'a que peu d'importance voire aucune : chacun des fils conducteurs 110 ou 106 ou 416 ou les deux 424 peut être utilisé pour l'un ou l'autre des différents rôles ici présentés, fil de retour ou fil de continuité ou fil de communication ou fil d'alimentation électrique, quelle que soit sa position au sein de l'agencement transversal du faisceau.

Une configuration actuellement préférée est d'utiliser le fil conducteur 110 enrobé par l'enveloppe de détection 114 pour transporter le signal de communication, mais toutes les autres répartitions sont ici explicitement envisagées dans l'invention.

Dans ce mode de configuration, il est possible d'obtenir un câble d'un diamètre de l'ordre de 6mm à 8mm.

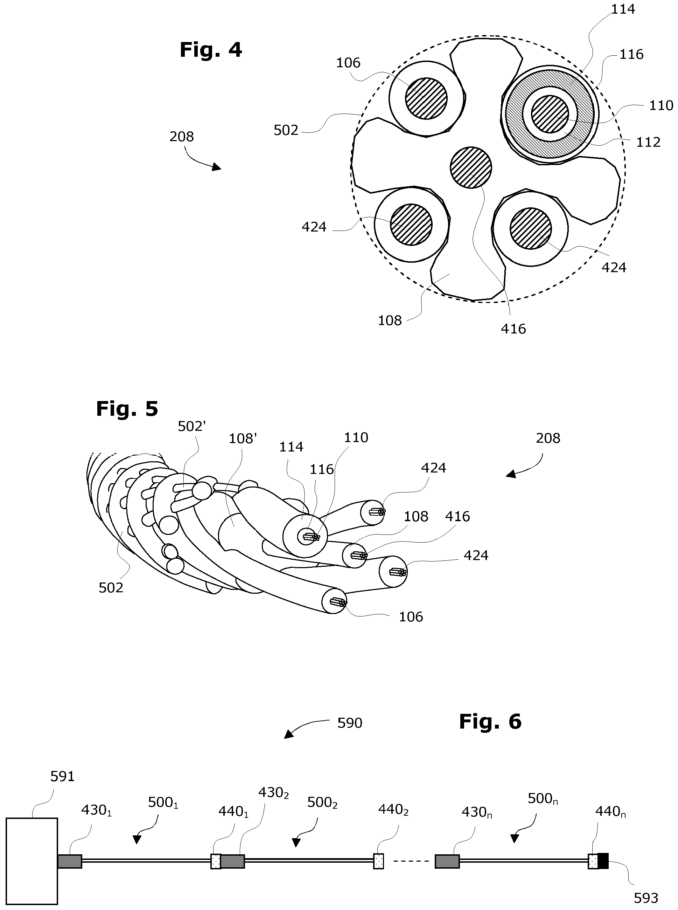

Les FIGURE 4 et FIGURE 5 illustrent un exemple actuellement préféré de mode de réalisation de l'invention concernant l'agencement transversal du faisceau d'un capteur selon l'invention.

Dans ce mode de réalisation, le faisceau 208 enserre, à l'intérieur d'une gaine ajourée 502 fournissant une protection mécanique :
- les deux fils conducteurs isolés de détection, 106, 110 dans cet exemple, incluant un fil retour et un fil de continuité ;
- trois fils conducteurs isolés formant le bus de communication et incluant :
   ∘ deux fils conducteurs isolés 424 fournissant une alimentation électrique, et
   ∘ un fil conducteur isolé formant le fil de communication 416, en coopération avec l'un desdits fils conducteurs d'alimentation électrique.

Ainsi que le montre la figure, le membre de détection présente la forme d'une enveloppe de détection cylindrique 114 et sa gaine isolante perméable 116, qui enrobe l'un 110 desdits fils conducteurs et son isolant 112. Ce membre de détection, avec trois autres fils conducteurs isolés 106, 424 sont disposés autour d'une âme centrale formée par le cinquième fil conducteur isolé 416.

Ainsi qu'on le voit en FIGURE 4 et FIGURE 5, la surface extérieure de l'âme centrale, ici de l'isolant 108 de cette âme centrale ou d'une couche supplémentaire 108' de positionnement, présente transversalement une alternance d'excroissances et de creux formant des rainures longitudinales dans lesquelles sont disposés les différents fils conducteurs entourant ladite âme centrale, c'est-à-dire 110 et son enveloppe 114, 106, et les deux fils 424.

Dans un exemple de mode de réalisation, comme illustré en FIGURE 5, la protection mécanique extérieure 502 est fournie par une gaine ajourée réalisée en un seul élément extrudé autour des conducteurs du faisceau. Par exemple, cette gaine présente une texture formée par deux couches superposées 502 et 502', chacune desdites couches étant composée de plusieurs fibres parallèles entre elles, torsadées autour dudit faisceau. Ces couches sont torsadées dans des sens opposés l'une de l'autre. Ces deux couches sont réalisées par coextrusion à chaud, et leurs fibres respectives sont ainsi rendues solidaires d'une couche à l'autre par fusion en leurs différents points de croisement. On obtient ainsi un filet résistant, résistant au détricotage, et plus rapide et économique à produire que s'il fallait torsader ou tresser ensemble des fibres indépendantes.

Ce type de gaine peut bien sûr s'appliquer à tous les modes de réalisation comprenant un faisceau linéaire.

la FIGURE 6 est une vue schématique de côté illustrant un exemple de mode de réalisation d'un système de détection selon l'invention, comprenant une pluralité de capteurs avec modules de connexion détachables fixés aux extrémités des capteurs.

Les FIGURE 6, FIGURE 10 et FIGURE 12 illustrent différents exemples de mode de réalisation d'un système de détection 590, 690, 790 selon l'invention. Un tel système comprend un câble "composite", formé d'une pluralité de capteurs connectés entre eux en série et dont le premier, c'est-à-dire celui le plus en amont (à gauche sur les figures), est branché sur une centrale de gestion ou module de surveillance 591. Les différents capteurs d'un même câble composite sont agencés chacun de façon à recevoir un signal d'interrogation différent des autres.

La FIGURE 6 illustre un tel système 590 comprenant un câble "composite" dans lequel tous les capteurs 500₁ à 500ₙ sont identiques, en dehors de leurs données individuelles d'identification. Ces capteurs sont connectés entre eux de manière étanche et démontable, par des connecteurs dits détachables à de deux types complémentaires 430₁ à 430ₙ et 440₁ à 440ₙ, fixés et raccordés de manière permanente à leurs deux extrémités, par exemple par soudure. Le connecteur 430₂ (d'un premier type) d'une extrémité amont d'un capteur 500₂ est ainsi connecté de manière démontable avec le connecteur 440₁ (d'un deuxième type complémentaire au premier type) de l'extrémité aval du capteur voisin 500₁ situé en amont.

Comme illustré en FIGURE 7, chaque capteur comporte deux connecteurs 430 et 440 de types complémentaires entre eux, chacun fixé ou soudé de façon permanente et sous encapsulation étanche à l'une des deux extrémités du faisceau 208.

Dans ce mode de réalisation, comme illustré en FIGURE 8, l'un des connecteurs, ici appelé module de connexion amont 430, renferme les différents modules électroniques du capteur, ici les modules de gestion 210, de communication 410 et d'alimentation 420, par exemple réalisés au sein d'une même carte électronique. Ces modules électroniques ainsi que les raccordements des éléments du faisceau au connecteur et aux modules électroniques sont encapsulés de façon étanche. Ce module de connexion 430 porte des moyens de connexion électrique vers l'amont des trois fils du bus de communication 416 et 424 du capteur, dans cet exemple sous la forme de broches mâles 436 et 434. Ce module de connexion 430 comprend aussi des moyens amont de fixation démontable, ici un filetage mâle 431.

Comme illustré en FIGURE 9, l'autre connecteur, ici appelé module de prolongation 440, porte des moyens de connexion vers l'aval, raccordé de façon encapsulée et étanche avec les trois fils du bus de communication 416 et 424 du capteur. Ces moyens de connexion électrique aval sont complémentaires des moyens de connexion électrique amont 436 et 434, et sont ici constitués par des fiches femelles 444 et 446. Ce module de prolongation 440 comprend aussi des moyens aval de fixation démontable, ici un filetage femelle tournant 441, qui sont complémentaires des moyens amont de fixation démontable.

L'un des connecteurs démontables comprend des moyens d'étanchéité démontables, ici réalisés par un joint torique 442 porté par un épaulement autour des moyens de connexion aval et écrasé lors du serrage contre un épaulement situé autour des moyens de connexion amont.

Ce mode de réalisation permet d'obtenir un diamètre de connecteur de l'ordre de10mm à 15mm.

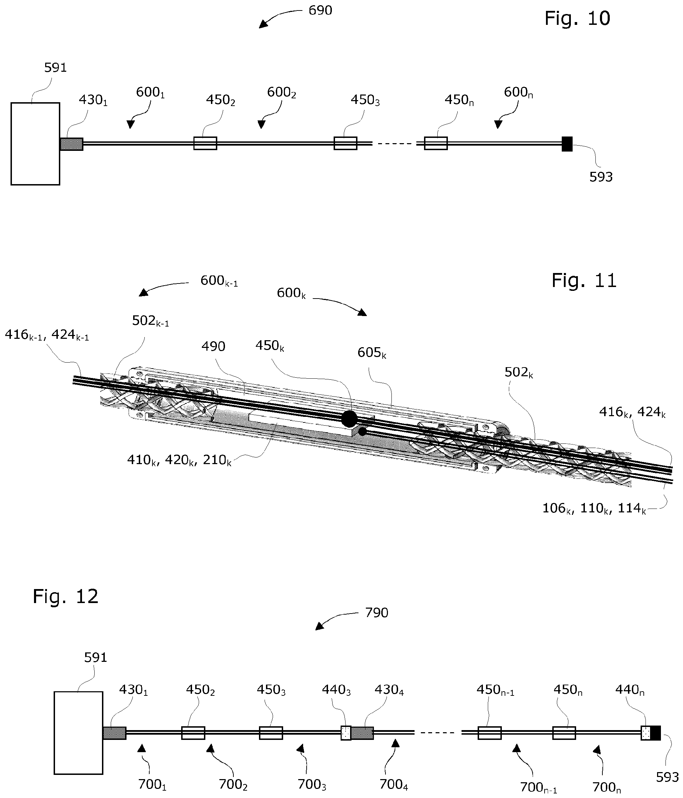

Ainsi qu'illustré en FIGURE 10, un mode de réalisation de l'invention peut aussi comprendre un système de détection 690 fonctionnant de manière identique mais dans lequel les capteurs 600₁ à 600ₙ sont connectés entre eux par des moyens de connexion permanente, par exemple par soudure.

Ainsi qu'illustré en FIGURE 11, ces moyens de connexion permanente 450ₖ, le module de communication 410ₖ et le module de gestion 210ₖ de chacun 500ₖ desdits capteurs sont tous scellés dans un matériau étanche 490 et de préférence rigide. Le module de communication 410ₖ et le module de gestion 210ₖ sont par exemple réalisés au sein d'une même carte électronique.

Il est ainsi possible de former un câble composite non démontable mais qui présente une meilleure étanchéité et/ou une meilleure résistance mécanique que s'il était formé de capteurs démontables.

Ainsi qu'illustré en FIGURE 12, un mode de réalisation de l'invention peut aussi comprendre un système de détection 790 fonctionnant de manière identique mais utilisant un câble composite formé par assemblage démontable de plusieurs câbles eux-mêmes composites non démontables. Il est ainsi possible d'obtenir un compromis entre la flexibilité de mise en oeuvre et de stockage et le nombre de connexions détachables qui soit adapté à différents types de besoins.

A titre d'exemple, des capteurs connectés selon ces différentes méthodes, possiblement combinées entre elles, permettent de réaliser des câbles composites opérationnels de l'ordre de 60 voire 120 capteurs de 20m chacun.

Au sein des connecteurs, détachables ou permanents, toutes les connexions des fils conducteurs et membre de détection ainsi que la totalité des éléments ou modules électroniques sont de préférence encapsulées de façon étanche, typiquement noyées dans un matériau 490 étanche aux liquides et aux gaz et de préférence rigide, par exemple une résine durcissable ou polymérisable telle que époxy ou polyuréthane ou à base d'isocyanates.

### Exemple d'un autre mode de réalisation du faisceau

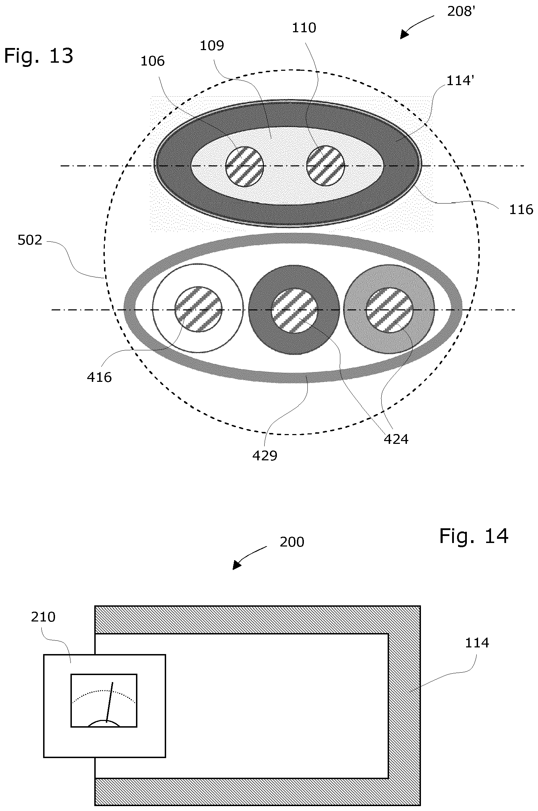

La FIGURE 13 est une est une vue en coupe transversale du faisceau, illustrant un autre exemple de mode de réalisation du faisceau d'un capteur selon l'invention, qui ne sera décrit que dans ses différences.

Dans ce mode de réalisation de l'invention, le faisceau 208 comprend un élément détecteur comprenant une enveloppe de détection 114' de section oblongue entourant deux fils conducteurs isolés 106 et 110. L'un de ces fils conducteurs, par exemple le fil conducteur 110, est utilisé pour la détection de fuites et est appelé fil de détection. L'autre fil conducteur 106 est utilisé comme fil de continuité pour détecter une rupture de l'élément détecteur et donc du câble de détection. Ces fils conducteurs 106 et 110 sont isolés l'un de l'autre, et vis-à-vis de l'extérieur, au moyen d'une seule et même enveloppe isolante 109 dans laquelle ils sont noyés.

La forme oblongue de l'enveloppe de détection permet une plus grande surface extérieure, qui peut recueillir une plus grande quantité de liquide à détecter, et ainsi rendre la détection plus fiable et/ou plus rapide.

L'enveloppe de détection 114' est enrobée par une enveloppe isolante 116 continue, isolante électriquement, perméable au liquide à détecter et étanche aux liquides conducteurs pouvant être présent dans l'environnement.

L'enveloppe de détection 114' est torsadée avec une autre enveloppe oblongue 429 qui entoure ou enrobe trois fils formant le bus de communication.

La forme oblongue de ces deux enveloppes peut permettre entre autres d'utiliser des éléments préfabrication, et/ou d'obtenir une torsade plus serrée sans nécessiter la présence d'une âme centrale spécifique ou plus épaisse, et ainsi de gagner en compacité.

De préférence, l'enveloppe de détection 114' et l'enveloppe 429 du bus de communication sont torsadées ensemble de façon à ce que leurs plus grandes dimensions transversales respectives soient sensiblement parallèles entre elles sur toute la longueur du faisceau, ce qui permet de limiter l'encombrement extérieur du faisceau.

L'ensemble est de préférence protégé par une gaine ajourée de protection 502 mécanique pour laisser passer le liquide à détecter

Selon une particularité optionnelle de ce mode de réalisation de l'invention, les au moins deux fils conducteurs 106 et 110 de détection sont noyés dans une même enveloppe isolante 109, laquelle enveloppe isolante est enrobée par l'enveloppe de détection 114'.

De façon générale, il est à noter que tous les différents modes de réalisation de l'agencement transversal du faisceau de l'invention peuvent être combinés avec tous les modes de réalisation des modes de connexion des capteurs entre eux.

### Exemple d'un autre mode de réalisation de l'élément détecteur

Bien que la configuration linéaire pour le moyen senseur et l'élément détecteur soit très employée dans de nombreux domaines, d'autres peuvent aussi être réalisées dans le cadre de l'invention.

Par exemple, comme illustré en FIGURE 14, le membre de détection 114 peut être disposé en boucle entre deux branchements du module de gestion 210, sans utiliser de fil conducteur retour, par exemple pour protéger des barres ou des tuyaux verticaux, possiblement avec une pluralités de capteurs raccordés en sérier pour protéger une série de barres ou de tuyaux parallèles. Bien que non illustré sur la figure, il est aussi envisagé d'utiliser un membre de détection formé par une enveloppe de détection branchée en boucle de façon similaire, et qui enrobe un unique fil conducteur isolé servant de fil de vérification de continuité.

Bien sûr, l'invention n'est pas limitée aux exemples qui viennent d'être décrits et de nombreux aménagements peuvent être apportés à ces exemples sans sortir du cadre de l'invention.

## Revendications

1. Elément détecteur (200) pour câble de détection de fuites d'un liquide électriquement non-conducteur, ledit élément détecteur comprenant au moins un moyen senseur (208) qui inclut au moins un membre de détection (114), réalisé au moins en partie en une matière qui gonfle lorsqu'elle est en contact avec ledit liquide et qui est chargée de particules électriquement conductrices, de sorte que :
- le membre de détection (114) est conducteur lorsqu'il n'est pas contaminé par ledit liquide non-conducteur, et
- le membre de détection (114) perd de sa conductivité lorsqu'il gonfle sous l'effet dudit liquide ;
ledit élément détecteur étant **caractérisé en ce que** le moyen senseur présente une forme de faisceau (208) allongé avec une extrémité proximale et une extrémité distale vis-à-vis d'un module électronique dit de gestion (210), et qui comprend en outre au moins deux fils conducteurs isolés (106, 110), dits de détection, formant un faisceau s'étendant sur toute la longueur de l'élément détecteur et qui sont connectés par une extrémité dite proximale audit module de gestion (210) ; et **en ce que** ledit membre de détection (114) est connecté au module de gestion (210) agencé pour détecter la présence dudit liquide en constatant une diminution de la conductivité dudit membre de détection, ledit module de gestion (210) étant agencé pour :
- d'une part détecter la présence de liquide en constatant une diminution de la conductivité dudit membre de détection (114) au moyen d'une connexion d'une extrémité distale dudit membre de détection avec l'extrémité distale de l'un des fils conducteurs de détection (106, 110), dit fil retour, et
- d'autre part vérifier la continuité de l'élément détecteur en constatant la continuité électrique d'un circuit établi par connexion de l'extrémité distale de l'autre fil conducteur de détection, dit fil de continuité, avec l'extrémité distale dudit fil retour.

2. Elément détecteur selon la revendication précédente, **caractérisé en ce que** le membre de détection (114) présente la forme d'une enveloppe entourant au moins l'un (110) desdits fils conducteur isolés.

3. Elément détecteur selon l'une quelconque des revendications précédentes, **caractérisé en ce que** le membre de détection (114) est en outre entouré par une enveloppe électriquement isolante (116), qui est étanche à un ou plusieurs liquides conducteurs tout en laissant passer le liquide non-conducteur à détecter.

4. Elément détecteur selon l'une quelconque des revendications précédentes, **caractérisé en ce que** le faisceau incluant le membre de détection (114) est entouré par une gaine ajourée (502) fournissant une protection mécanique, et dont la texture est formée par deux couches (502, 502') superposées, chacune desdites couches étant composée de plusieurs fibres parallèles entre elles torsadées autour dudit faisceau, lesdites couches étant torsadées dans des sens opposés l'une de l'autre, lesdites couches étant solidaires l'une de l'autre par fusion de leurs fibres respectives en leurs différents points de croisement.

5. Capteur ou câble de détection (500, 600, 700) pour la détection de fuites de liquides non-conducteurs comprenant :
d'une part au moins un élément détecteur (200) selon l'une quelconque des revendications 2 à 4 ; et
d'autre part au moins un élément de communication, incluant :
- au moins un module électronique de communication (410) agencé pour émettre une donnée de mesure ou détection issue dudit élément détecteur (200), en association avec une donnée identifiant ledit module de communication et/ou en réponse à un signal d'interrogation adressé sélectivement audit module de communication, et
- au moins un fil conducteur isolé (416), dit de communication, formant un bus de communication prévu pour transporter un signal de communication incluant un tel signal d'interrogation et/ou une telle donnée de mesure, depuis et/ou vers ledit module de communication (410), sur toute la longueur dudit élément détecteur (200), en coopération avec au moins un fil conducteur constituant une référence de tension, par exemple un fil de masse.

6. Capteur selon la revendication précédente, **caractérisé en ce que** le module de communication (210) est agencé pour utiliser, en coopération avec un fil d'alimentation utilisé en référence, un unique fil de communication (416) :
- à la fois pour transporter et recevoir un signal d'interrogation, et
- à la fois pour transporter et émettre une donnée de mesure émise en réponse audit signal d'interrogation ;
formant ainsi un bus de communication et d'alimentation comprenant uniquement trois fils conducteurs, soit au total uniquement cinq fils conducteurs (106, 110, 416, deux fois 424) en plus du membre de détection (114, 114').

7. Capteur selon l'une des revendications 5 à 6, **caractérisé en ce qu'**il comprend un faisceau (208) enserrant, à l'intérieur d'une gaine ajourée (502) fournissant une protection mécanique :
- les deux fils conducteurs isolés de détection (106, 110) incluant un fil retour et un fil de continuité,
- trois fils conducteurs isolés formant le bus de communication et incluant
o deux fils conducteurs isolés (424) fournissant une alimentation électrique, et
o un fil conducteur isolé formant le fil de communication (416), en coopération avec l'un desdits fils conducteurs d'alimentation électrique ;
**en ce que** ledit faisceau comprend en outre un membre de détection présentant la forme d'une enveloppe de détection cylindrique (114) entourant l'un desdits fils conducteurs isolés (106, 110, 416, 424) ; et
**en ce que** ledit membre de détection (114) et trois autres (par exemple 106, 424) desdits fils conducteurs isolés sont disposés autour d'une âme centrale formée par le cinquième (dans cet exemple 416, 108, 108') desdits fils conducteurs isolés.

8. Capteur selon la revendication précédente, **caractérisé en ce que** la surface extérieure (108) de l'âme centrale présente transversalement une alternance d'excroissances et de creux, formant ainsi des rainures longitudinales dans lesquelles sont disposés les différents fils conducteurs (106, 110, 424) entourant ladite âme centrale (416).

9. Capteur selon l'une des revendications 7 à 8, **caractérisé en ce que** les fils conducteurs (par exemple 106, 110, 424) sont torsadés autour de l'âme centrale (dans cet exemple 416, 108).

10. Capteur selon la revendication 5, **caractérisé en ce qu'**il comprend un faisceau (208') enserrant, à l'intérieur d'une gaine ajourée (502) fournissant une protection mécanique :
- deux fils conducteurs isolés de détection (106, 110) incluant un fil retour et un fil de continuité,
- deux fils conducteurs isolés fournissant une alimentation électrique (424), et
- un fil conducteur isolé formant le fil de communication (416) ;
ledit capteur étant en outre **caractérisé en ce qu'**il comprend un membre de détection (114') présentant la forme d'une enveloppe de détection entourant deux (106, 110) desdits fils conducteurs isolés ; et
**en ce que** ladite enveloppe de détection est torsadée avec les trois autres fils conducteurs isolés.

11. Capteur selon la revendication précédente, **caractérisé en ce que** l'enveloppe de détection (114') présente une section transversale qui est sous la forme d'un cercle aplati, ou une section transversale oblongue, ou une section transversale elliptique

12. Capteur (500, 700) selon l'une des revendications 5 à 11, **caractérisé en ce qu'**il comprend en outre deux connecteurs amovibles (430, 440) de types complémentaires l'un de l'autre, situés aux deux extrémités dudit capteur, qui sont chacun raccordés aux extrémités correspondantes du ou des fils conducteurs (424, 416) du bus de communication, de façon à permettre une connexion successive modulaire entre plusieurs exemplaires (500₁ à 500ₙ) dudit capteur dans laquelle chaque capteur (500ₖ) est apte à transmettre des données de mesure et des signaux d'interrogation depuis l'un (500ₖ₋₁) vers l'autre (500ₖ₊₁) des capteurs avec lesquels il est connecté.

13. Système de détection (590, 690, 790) comprenant une pluralité de capteurs (500₁ à 500ₙ, 600₁ à 600ₙ, 700₁ à 700ₙ) selon l'une des revendications 5 à 12 connectés en série l'un avec l'autre, et agencés chacun de façon à recevoir un signal d'interrogation différent des autres.

14. Système (690, 790) selon la revendication précédente, **caractérisé en ce que**, **caractérisé en ce qu'**au moins deux capteurs (600₁ et 600₂, 700₁ et 700₂) sont connectés entre eux par des moyens de connexion permanente (450ₖ), et **en ce que** lesdits moyens de connexion permanente (450ₖ), le module de communication (410ₖ) et le module de gestion (210ₖ) de chacun (500ₖ) desdits capteurs sont tous scellés dans un matériau étanche.

15. Procédé pour réaliser un élément détecteur (200) selon l'une des revendications 1 à 4 ou un capteur (500, 600, 700) selon l'une des revendications 5 à 12, comprenant les étapes suivantes :
- dépôt, autour d'un fil conducteur isolé, d'une enveloppe de détection en un matériau chargé de particules métallique et d'un type gonflant sous l'effet d'une contamination par un liquide non conducteur à détecter,
- dépôt, autour de ladite enveloppe de détection, d'une couche gonflante isolante étanche à au moins un liquide conducteur et perméable audit liquide à détecteur,
- torsadage dudit membre de détection ainsi réalisé, ainsi que d'au moins trois autres fils conducteurs isolés, autour d'une âme centrale comprenant une enveloppe isolante entourant un fil conducteur,
- enrobage du faisceau ainsi réalisé, par extrusion d'un filet ou d'une gaine ajourée de protection mécanique.

## Patentansprüche

1. Detektionselement (200) für ein Kabel zur Detektion von Leckagen einer elektrisch nicht leitenden Flüssigkeit, wobei das Detektionselement wenigstens ein Sensormittel (208) umfasst, das wenigstens ein Detektionsglied (114) einschließt, welches wenigstens teilweise aus einem Material gefertigt ist, das aufquillt, wenn es mit der Flüssigkeit in Kontakt ist, und das mit elektrisch leitenden Partikeln beladen ist, so dass:
- das Detektionsglied (114) leitend ist, wenn es nicht durch die nicht leitende Flüssigkeit verunreinigt ist, und
- das Detektionsglied (114) von seiner Leitfähigkeit verliert, wenn es unter der Wirkung der Flüssigkeit aufquillt;
wobei das Detektionselement **dadurch gekennzeichnet ist, dass** das Sensormittel eine Form eines langgestreckten Bündels (208) aufweist, welches ein proximales Ende und ein distales Ende, das einem sogenannten elektronischen Steuermodul (210) gegenüberliegt, hat und welches ferner wenigstens zwei isolierte, sogenannte Detektionsleitungsdrähte (106, 110) umfasst, die ein Bündel bilden, das sich über die gesamte Länge des Detektionselements erstreckt, und die mit einem sogenannten proximalen Ende an das Steuermodul (210) angeschlossen sind;
und dass das Detektionsglied (114) an das Steuermodul (210) angeschlossen ist, welches dazu eingerichtet ist, das Vorliegen der Flüssigkeit durch Feststellen einer Verringerung der Leitfähigkeit des Detektionsgliedes zu erfassen, wobei das Steuermodul (210) dazu eingerichtet ist:
- einerseits das Vorliegen von Flüssigkeit durch Feststellen einer Verringerung der Leitfähigkeit des Detektionsgliedes (114) mittels einer Verbindung eines distalen Endes des Detektionsgliedes mit dem distalen Ende von einem der Detektionsleitungsdrähte (106, 110), sogenannten Rückdrahtes, zu erfassen, und
- andererseits die Kontinuität des Detektionselementes durch Feststellen des Stromflusses eines Kreises, der durch Verbindung des distalen Endes des anderen Detektionsleitungsdrahtes, sogenannten Kontinuitätsdrahtes, mit dem distalen Ende des Rückdrahtes hergestellt ist, zu überprüfen.

2. Detektionselement nach dem vorhergehenden Anspruch, **dadurch gekennzeichnet, dass** das Detektionsglied (114) die Form einer Hülle, die wenigstens einen (110) der isolierten Leitungsdrähte umgibt, aufweist.

3. Detektionselement nach einem der vorhergehenden Ansprüche, **dadurch gekennzeichnet, dass** das Detektionsglied (114) ferner von einer elektrisch isolierenden Hülle (116), die gegenüber einer oder mehreren leitenden Flüssigkeiten dicht ist und gleichzeitig die zu erfassende nicht leitende Flüssigkeit durchlässt, umgeben ist.

4. Detektionselement nach einem der vorhergehenden Ansprüche, **dadurch gekennzeichnet, dass** das Bündel, welches das Detektionsglied (114) einschließt, von einem durchbrochenen Mantel (502) umgeben ist, der einen mechanischen Schutz bietet und dessen Struktur durch zwei übereinander angeordnete Schichten (502, 502') gebildet ist, wobei eine jede der Schichten aus mehreren zueinander parallelen, um das Bündel herum gewundenen Fasern beseht, wobei die Schichten zueinander in entgegengesetzten Richtungen gewunden sind, wobei die Schichten durch Verschmelzen ihrer jeweiligen Fasern an ihren verschiedenen Kreuzungspunkten fest miteinander verbunden sind.

5. Sensor oder Detektionskabel (50, 600, 700) zur Detektion von Leckagen von nicht leitenden Flüssigkeiten, umfassend:
einerseits wenigstens ein Detektionselement (200) nach einem der Ansprüche 2 bis 4, und
andererseits wenigstens ein Kommunikationselement, das einschließt:
- wenigstens ein elektronisches Kommunikationsmodul (410), welches dazu eingerichtet ist, eine Mess- oder Detektionsangabe aus dem Detektionselement (200) in Verbindung mit einer das Kommunikationsmodul identifizierenden Angabe und/oder als Reaktion auf ein selektiv an das Kommunikationsmodul gerichtetes Abfragesignal zu senden, und
- wenigstens einen isolierten, sogenannten Kommunikationsleitungsdraht (416), der einen Kommunikationsbus bildet, welcher dazu vorgesehen ist, ein ein solches Abfragesignal und/oder eine solche Messangabe einschließendes Kommunikationssignal von dem und/oder zu dem Kommunikationsmodul (410) über die gesamte Länge des Detektionselements (200), in Zusammenarbeit mit wenigstens einem eine Spannungsreferenz bildenden Leitungsdraht, zum Beispiel einem Massedraht, zu übertragen.

6. Sensor nach dem vorhergehenden Anspruch, **dadurch gekennzeichnet, dass** das Kommunikationsmodul (210) dazu eingerichtet ist, in Zusammenarbeit mit einem als Referenz verwendeten Versorgungsdraht einen einzigen Kommunikationsdraht (416) zu verwenden:
- um gleichzeitig ein Abfragesignal zu übertragen und zu empfangen, und
- um gleichzeitig eine als Reaktion auf das Abfragesignal gesandte Messangabe zu übertragen und zu senden;
wodurch ein Kommunikations- und Versorgungsbus gebildet wird, der lediglich drei Leitungsdrähte, also insgesamt lediglich fünf Leitungsdrähte (106, 110, 416, zweimal 424), zusätzlich zu dem Detektionsglied (114, 114') umfasst.

7. Sensor nach einem der Ansprüche 5 bis 6, **dadurch gekennzeichnet, dass** er ein Bündel (208) umfasst, das innerhalb eines einen mechanischen Schutz bietenden durchbrochenen Mantels (502) einschließt:
- die beiden isolierten Detektionsleitungsdrähte (106, 110), die einen Rückdraht und einen Kontinuitätsdraht einschließen,
- drei isolierte Leitungsdrähte, die den Kommunikationsbus bilden und einschließen
- zwei isolierte Leitungsdrähte (424), die eine Stromversorgung bereitstellen, und
- einen den Kommunikationsdraht (416) bildenden isolierten Leitungsdraht, in Zusammenarbeit mit einem der Stromversorgungsleitungsdrähte;
dass das Bündel ferner ein Detektionsglied umfasst, das die Form einer zylindrischen Detektionshülle (114), welche einen der isolierten Leitungsdrähte (106, 110, 416, 424) umgibt, aufweist; und
dass das Detektionsglied (114) und drei weitere (zum Beispiel 106, 424) der isolierten Leitungsdrähte um eine durch den fünften (bei diesem Beispiel 416, 108, 108') der isolierten Leitungsdrähte gebildete mittlere Seele herum angeordnet sind.

8. Sensor nach dem vorhergehenden Anspruch, **dadurch gekennzeichnet, dass** die Außenfläche (108) der mittleren Seele quer eine Folge von Ausstülpungen und Vertiefungen aufweist, wodurch Längsnuten gebildet werden, in denen die die mittlere Seele (416) umgebenden verschiedenen Leitungsdrähte (106, 110, 424) angeordnet sind.

9. Sensor nach einem der Ansprüche 7 bis 8, **dadurch gekennzeichnet, dass** die Leitungsdrähte (zum Beispiel 106, 110, 424) um die mittlere Seele (bei diesem Beispiel 416, 108) herum gewunden sind.

10. Sensor nach Anspruch 5, **dadurch gekennzeichnet, dass** er ein Bündel (208') umfasst, das innerhalb eines einen mechanischen Schutz bietenden durchbrochenen Mantels (502) einschließt:
- zwei isolierte Detektionsleitungsdrähte (106, 110), die einen Rückdraht und einen Kontinuitätsdraht einschließen,
- zwei isolierte Leitungsdrähte, die eine Stromversorgung (424) bereitstellen, und
- einen den Kommunikationsdraht (416) bildenden isolierten Leitungsdraht,
wobei der Sensor ferner **dadurch gekennzeichnet ist, dass** er ein Detektionsglied (114') umfasst, das die Form einer Detektionshülle, welche zwei (106, 110) der isolierten Leitungsdrähte umgibt, aufweist; und
dass die Detektionshülle mit den drei weiteren isolierten Leitungsdrähten verdrillt ist.

11. Sensor nach dem vorhergehenden Anspruch, **dadurch gekennzeichnet, dass** die Detektionshülle (114') einen Querschnitt, der in Form eines abgeflachten Kreises vorliegt, oder einen länglichen Querschnitt oder einen elliptischen Querschnitt aufweist.

12. Sensor (500, 700) nach einem der Ansprüche 5 bis 11, **dadurch gekennzeichnet, dass** er ferner zwei lösbare Verbinder (430, 440) vom einander ergänzenden Typ, an den beiden Enden des Sensors befindlich, aufweist, die jeweils mit den entsprechenden Enden des oder der Leitungsdrähte (424, 416) des Kommunikationsbusses verbunden sind, um eine sukzessive modulare Verbindung zwischen mehreren Exemplaren (500₁ bis 500ₙ) des Sensors zu ermöglichen, bei der jeder Sensor (500ₖ) geeignet ist, Messdaten und Abfragesignale von einem (500ₖ₋₁) zum anderen (500ₖ₊₁) der Sensoren, mit denen er verbunden ist, zu übertragen.

13. Detektionssystem (590, 690, 790), umfassend eine Vielzahl von Sensoren (500₁ bis 500ₙ, 600₁ bis 600ₙ, 700₁ bis 700ₙ) nach einem der Ansprüche 5 bis 12, welche in Reihe miteinander verbunden und jeweils derart angeordnet sind, dass sie ein von den anderen verschiedenes Abfragesignal empfangen.

14. System (690, 790) nach dem vorhergehenden Anspruch, **dadurch gekennzeichnet, dass** wenigstens zwei Sensoren (600₁ und 600₂, 700₁ und 700₂) durch Mittel zur permanenten Verbindung (450ₖ) untereinander verbunden sind und dass die Mittel zur permanenten Verbindung (450ₖ), das Kommunikationsmodul (410ₖ) und das Steuermodul (210ₖ) eines jeden (500ₖ) der Sensoren alle in ein dichtes Material eingegossen sind.

15. Verfahren zum Herstellen eines Detektionselements (200) nach einem der Ansprüche 1 bis 4 oder eines Sensors (500, 600, 700) nach einem der Ansprüche 5 bis 12, das die folgenden Schritte umfasst:
- Abscheiden, um einen isolierten Leitungsdraht herum, einer Detektionshülle aus einem Material, das mit Metallpartikeln beladen und von einem Typ ist, der unter der Wirkung einer Verunreinigung durch eine zu erfassende nicht leitende Flüssigkeit aufquillt,
- Abscheiden, um die Detektionshülle herum, einer aufquellenden Isolierschicht, die gegenüber wenigstens einer leitenden Flüssigkeit dicht und für die zu erfassende Flüssigkeit durchlässig ist,
- Verwinden des so hergestellten Detektionsgliedes sowie von wenigstens drei weiteren isolierten Leitungsdrähten um eine mittlere Seele, die eine einen Leitungsdraht umgebende isolierende Hülle umfasst,
- Ummanteln des so hergestellten Bündels durch Extrudieren eines Netzes oder eines durchbrochenen Mantels zum mechanischen Schutz.

## Claims

1. Detecting element (200) for a cable for detecting leaks of electrically nonconductive liquid, said detecting element comprising at least one sensor means (208) which includes at least one detection member (114), produced at least partially from a material which swells upon contact with said liquid and which is filled with electrically conductive particles, such that:
- the detection member (114) is conductive when it is not contaminated by said nonconductive liquid, and
- the detection member (114) loses its conductivity when it swells under the effect of said liquid;
said detecting element being **characterized in that** the sensor means has the form of an elongated bundle (208) with a proximal end and a distal end with respect to an electronic module referred to as management module (210), and which comprises moreover at least two insulated conductive wires (106, 110), referred to as detection wires, forming a bundle extending over the entire length of the detecting element and which are connected by one end, referred to as proximal end, to said management module (210);
and **in that** said detection member (114) is connected to the management module (210), arranged in order to detect the presence of said liquid by recording a decrease in the conductivity of said detection member, said management module (210) being arranged in order to:
- on the one hand detect the presence of liquid by recording a reduction in the conductivity of said detection member (114) by means of a connection at one distal end of said detection member with the distal end of one of the conductive detection wires (106, 110), referred to as return wire, and
- on the other hand verify the continuity of the detecting element by recording the electrical continuity of a circuit established by connecting the distal end of the other conductive detection wire, referred to as continuity wire, with the distal end of said return wire.

2. Detecting element according to the preceding claim, **characterized in that** the detection member (114) has the shape of a casing surrounding at least one (110) of said insulated conductive wires.

3. Detecting element according to any one of the preceding claims, **characterized in that** the detection member (114) is moreover surrounded by an electrically insulating casing (116), which is impervious to one or more conductive liquids while allowing the nonconductive liquid to be detected to pass through.

4. Detecting element according to any one of the preceding claims, **characterized in that** the bundle including the detection member (114) is surrounded by a perforated sheath (502) providing a mechanical protection, and the texture of which is formed by two superimposed layers (502, 502'), each of said layers being constituted by several fibres parallel with each other twisted around said bundle, said layers being twisted in opposite directions from each other, said layers being secured to each other by means of fusion of their respective wires at their different points of intersection points.

5. Sensor or detection cable (500, 600, 700) for the detection of leaks of nonconductive liquids comprising:
on the one hand at least one detecting element (200) according to the any one of claims 2 to 4; and
on the other hand a communication element, including:
- at least one electronic communication module (410) arranged in order to transmit a measurement or detection data item originating from said detecting element (200), in combination with a data item identifying said communication module and/or in response to a polling signal sent selectively to said communication module, and
- at least one insulated conductive wire (416), referred to as communication wire, forming a communication bus provided in order to carry a communication signal including such a polling signal and/or such a measurement data item, from and/or to said communication module (410), over the entire length of said detecting element (200), in cooperation with at least one conductive wire constituting a voltage reference, for example an earth wire.

6. Sensor according to the preceding claim, **characterized in that** the communication module (210) is arranged in order to use, in cooperation with a power supply wire used as reference, a single communication wire (416):
- both for carrying and receiving a polling signal, and
- both for carrying and transmitting a measurement data item transmitted in response to said polling signal;
thus forming a communication and power supply bus comprising only three conductive wires, i.e. a total of only five conductive wires (106, 110, 416, 424 times two) in addition to the detection member (114, 114').

7. Sensor according to one of claims 5 to 6, **characterized in that** it comprises a bundle (208) enclosing, inside a perforated sheath (502) providing a mechanical protection:
- the two insulated detection wires (106, 110) including a return wire and a continuity wire,
- three insulated conductive wires forming the communication bus and including
o two insulated conductive wires (424) providing an electrical power supply, and
o an insulated conductive wire forming the communication wire (416) in cooperation with one of said electrical power supply conductive wires;
**in that** said bundle comprises moreover a detection member having the form of a cylindrical detection casing (114) surrounding one of said insulated conductive wires (106, 110, 416, 424); and
**in that** said detection member (114) and three other (for example 106, 424) of said insulated conductive wires are arranged around a central core formed by the fifth (in this example 416, 108, 108') of said insulated conductive wires.

8. Sensor according to the preceding claim, **characterized in that** the outer surface (108) of the central core has transversally an alternation of protuberances and hollows, thus forming longitudinal grooves in which the different conductive wires (106, 110, 424) surrounding said central core (416) are arranged.

9. Sensor according to any one of claims 7 to 8, **characterized in that** the conductive wires (for example 106, 110, 424) are twisted around the central core (in this example 416, 108).

10. Sensor according to claim 5, **characterized in that** it comprises a bundle (208') enclosing, inside a perforated sheath (502) providing a mechanical protection:
- two insulated conductive detection wires (106, 110) including a return wire and a continuity wire,
- two insulated conductive wires providing an electrical power supply (424), and
- an insulated conductive wire forming the communication wire (416);
said sensor being moreover **characterized in that** it comprises a detection member (114') having the shape of a cylindrical detection casing surrounding two (106, 110) of said insulated conductive wires; and
**in that** said detection casing is twisted with the three other insulated conductive wires.

11. Sensor according to the preceding claim, **characterized in that** the detection casing (114') has a transverse section which is in the form of a flattened circle, or an oblong transverse section, or an elliptical transverse section.

12. Sensor (500, 700) according to one of claims 5 to 11, **characterized in that** it moreover comprises two detachable connectors (430, 440) of complementary types, located at the two ends of said sensor, which are each connected to the corresponding ends of said conductive wire(s) (424, 416) of the communication bus, in order to enable a successive modular connection between several copies (500₁ to 500ₙ) of said sensor in which each sensor (500ₖ) is capable of transmitting measurement data and polling signals from one (500ₖ₋₁) to the other (500ₖ₊₁) of the sensors with which it is connected.

13. Detection system (590, 690, 790) comprising a plurality of sensors (500₁ to 500ₙ, 600₁ to 600ₙ, 700₁ to 700ₙ) according to one of claims 5 to 12 connected together in series and each arranged in order to receive a polling signal different from the others.

14. System (690, 790) according to the preceding claim, **characterized in that** at least two sensors (600₁ and 600₂, 700₁ and 700₂) are connected to each other by permanent connection means (450ₖ), and **in that** said permanent connection means (450ₖ), the communication module (410ₖ) and the management module (210ₖ) of each (500ₖ) of said sensors are all sealed in an impervious material.

15. Method for producing a detecting element (200) according to one of claims 1 to 4 or a sensor (500, 600, 700) according to one of claims 5 to 12, comprising the following steps:
- depositing, around an insulated wire, of a detection casing made from a material filled with metallic particles and of a type capable of swelling under the effect of a contamination by a non-conductive liquid to be detected,
- depositing, around said detection casing, of a swellable insulating layer which is impervious to at least one conductive liquid and pervious to said liquid to be detected,
- twisting said detection member thus produced, as well as at least three other insulated conductive wires, around a central core comprising an insulating casing surrounding a conductive wire,
- covering the bundle thus produced, by extruding a net or a perforated sheath for mechanical protection.
